(19) **Europäisches Patentamt**

**European Patent Office**

**Office européen des brevets**

(11) **EP 0 717 178 B1**

(12) **EUROPEAN PATENT SPECIFICATION**

(45) Date of publication and mention
of the grant of the patent:
**04.04.2001 Bulletin 2001/14**

(51) Int Cl.[7]: **F01N 3/20**

(21) Application number: **95117896.1**

(22) Date of filing: **01.07.1991**

(54) **Operation of catalytic converters**

Betrieb eines katalytischen Konverters

Fonctionnement d'un convertisseur catalitique

(84) Designated Contracting States:
**BE DE ES FR GB IT SE**

(30) Priority: **04.07.1990 JP 17694290**
**04.07.1990 JP 17694390**

(43) Date of publication of application:
**19.06.1996 Bulletin 1996/25**

(62) Document number(s) of the earlier application(s) in
accordance with Art. 76 EPC:
**91305927.5 / 0 465 184**

(73) Proprietor: **NGK INSULATORS, LTD.**
**Nagoya-City, Aichi Prefecture 467-0871 (JP)**

(72) Inventors:
• **Abe, Fumio**
**Handa-City, Aichi-pref 475 (JP)**

• **Harada, Takashi**
**Nagoya-City, Aichi-pref 465 (JP)**
• **Mizuno, Hiroshige**
**Tajimi-city, Gifu-pref. 507 (JP)**

(74) Representative: **Stoner, Gerard Patrick et al**
**MEWBURN ELLIS**
**York House**
**23 Kingsway**
**London WC2B 6HP (GB)**

(56) References cited:
**WO-A-89/10471      DE-A- 2 251 631**
**DE-A- 2 333 092**

• **SAE TRANSACTIONS, JOURNAL OF FUELS &**
**LUBRICANTS, vol. 99, no. 4, 1990, pages**
**230-239, XP000561427 WHITTENBERGER W A**
**ET AL: "RECENT DEVELOPMENTS IN**
**ELECTRICALLY HEATED METAL MONOLITHS"**

EP 0 717 178 B1

## Description

The present invention relates to methods of operating heaters, especially honeycomb-structure heaters, to catalytic converters which are suitable for use in automotive exhaust emission control.

Catalytic converters for use in controlling automotive exhaust gas must have a predetermined temperature or above when operated so as to make the catalyst catalytically active. Hence, the catalyst must be heated when the temperature thereof is not sufficiently high i.e., at the beginning of running of a vehicle.

Such techniques for heating the catalyst have been proposed in, for example JP-UM-A-67609/1988. This discloses a catalytic converter comprising a main ceramic monolithic catalyst and a metal monolithic catalyst disposed upstream of and adjacent to the main ceramic monolithic catalyst. The metal monolithic catalyst comprises an electrically conductive metal substrate with alumina coated thereon, and constitutes a preheater, disposed upstream and adjacent to the main monolithic catalyst. It has a foil-type metal honeycomb structure constructed such that current passes from its inner periphery to its outer periphery to generate heat. The resistance of the metal monolithic catalyst is not adjusted (i.e., only the material, dimensions and rib thickness of the metal honeycomb structure are defined and no adjustment is made to the resulting resistance of the metal honeycomb structure), and the metal monolithic catalyst exhibits insufficient temperature-rise characteristics. Furthermore, since the electrodes are provided in the inner peripheral portion of the structure, the central portion thereof does not act as a catalyst, and pressure loss is generated. Furthermore, the electrodes readily break due to the flow of exhaust gas.

Meanwhile, an example of such a catalytic converter has been introduced in SAE Paper 900503. This catalytic converter has a size of 480cm$^3$, and includes a heater with a catalyst carried thereon. The heater is energized by power of a 3 kW while oxygen is being supplied thereto, the energization being started before the engine is started, and the exhaust gas conversion at the beginning of the operation of the engine of a vehicle of the like can be increased. However it takes sixty seconds for the heater to be heated to 350°C, despite the large power consumption , because of the relatively large foil-type heater. This reduces exhaust gas conversion. Furthermore, it is difficult in a practical operation to energize the heater before the engine is operated. Also, the above literature does not refer to the amount of exhaust gas which can be controlled by the above catalytic converter, the temperature at which the catalyst functions nor the energization method. Furthermore a telescope phenomenon, inherent to the foil type heater, readily occurs in this heater to cause faulty operation thereof.

The problems addressed herein include the provision of a method of operating a catalytic converter, preferably so that the above problems of the prior art can be reduced.

The method of the invention is set out in claim 1.

The preferred temperature of the heater at which the power level is reduced is 300°C or above.

## BRIEF DESCRIPTION OF THE DRAWINGS

Fig. 1 (a) is a perspective view of an example of a resistance-adjusting type heater;
Fig. 1 (b) is an enlarged perspective view of the essential parts of the heater of Fig. 1 (a); and
Fig. 2 is a graph showing the relation between the time required to attain a given current density and the attained current density, obtained in the heater temperature rising characteristics checking test.

## DETAILED DESCRIPTION

In a resistance-adjusting type heater disclosed in EP 465184, the honeycomb structure having a large number of passages has at least two electrodes through which a current is supplied thereto. The honeycomb structure also has a resistance-adjusted structure which attains a current density of 5 A/mm$^2$ or above between the electrodes.

In this way, low-temperature automotive exhaust emissions at the beginning of the operation of an engine or the like can be quickly heated, and a high exhaust gas conversion can be achieved.

Current is preferably supplied between the electrodes at a current density of 5 A/mm$^2$ or above. In this way, the rate at which the temperature of the heater is raised increases, enabling the exhaust emissions at the beginning of the operation of the engine to be controlled. That is, the temperature of the heater may reach 300°C or above within ten seconds. This allows the main catalyst and the catalyst carried on the heater to function effectively.

Supply of current at a current density of 8 A/mm$^2$ or above may enable the temperature of the heater to reach 300°C or above within five seconds, and is therefore more preferable. Supply of current at a current density of 30 A/mm$^2$ or above requires a large amount of power, raises the temperature of the catalyst carried on the heater to too high a value, and is therefore undesirable from the viewpoint of durability of the catalyst.

The temperature at which the main monolithic catalyst or the catalyst carried on the heater functions is generally 300°C or above. In a practical operation, the temperature at the outlet of the heater or converter is measured, and power supplied to the heater is adjusted such that the heater or converter is heated to 300°C or above.

In the present specification the term, "current density" is defined to refer to the dimensions of the solid honeycomb material, not to the dimensions including the cell voids.

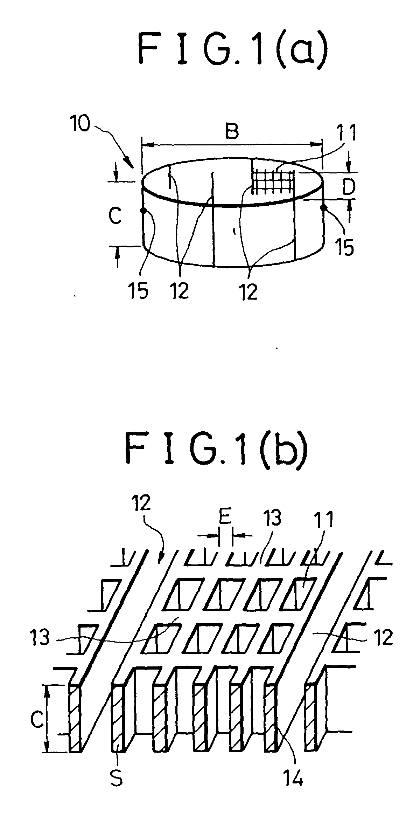

For example, in a resistance-adjusted type heater comprising a honeycomb structure 10 having a large number of passages 11 and a predetermined number of slits 12 which serve as the resistance adjusting means, as shown in Figs. 1(a) and 1(b), when the cross-sectional area (rib thickness(E) x length of heater (C)) of a cross-section 14 of a cell wall (rib) 13 is S, a number of ribs between the adjacent slits is n (e.g., n = 5 in the case of the heater shown in Fig. 1 (b) and the current which flows through the heater is I, the current density is given by I/(S x n).

A catalytic converter comprising the above-described resistance-adjusted type heater and a main catalyst may be operated using the method of this invention to control automotive exhaust emissions. The heater is preferably energised at a current density of 5/A$mm^2$ or above for at least sixty seconds after the engine is started, to heat the low-temperature exhaust gas quickly at the beginning of the operation of an engine. If the current density is below 5 A/$mm^2$, the heater must be preheated before the engine is started to obtain desired exhaust gas conversion characteristics. Therefore, this is not practical.

The heater is energised preferably at a current density of 5 A/$mm^2$ or above until it is heated to a temperature at which any catalyst carried on the heater and the main catalyst are activated (usually between 300 and 400°C).

Thereafter, the level of power supplied to the heater is reduced and the heater is successfully energized at a reduced power level. Reduction in the power level is preferably achieved either by turning the heater on/off or by energising the heater at a current density which is below 5 A/$mm^2$.

Energization of the heater at the time of starting the engine takes place concurrently with the operation of the engine.

In a catalytic converter operating method according to the invention, the heater is energized at a predetermined power level or above and thereby heated at the time of starting an engine. During the heating, an oxidizing gas is introduced into the catalytic converter. When the temperature of the heater exceeds a value at which a main catalyst of the catalytic converter or light-off catalyst carried on the heater functions, the power level is reduced preferably by an output adjuster and supply of the oxidizing gas is suspended.

Thus, since the low-temperature exhaust gas can be quickly heated to a temperature at which the catalyst starts functioning or above at the initial stage of the operation of an engine when the emissions of a vehicle is a maximum, increase in the exhaust gas conversion can be achieved. Furthermore, since the power level is reduced immediately after the desired temperature is reached, i.e., immediately after the catalyst is ignited, an efficient operation of the catalytic converter is possible.

In a preferred embodiment, the heater is energized at a power level of 1.5 KW or above, more preferably, at 3KW or above, per unit flow rate of exhaust gas ($m^3$/minute) and thereby heated at the time of starting the engine. In the case of the energization at a power level of 1.5 KW or above, the heater is heated to about 400°C within ten seconds. In the case of energization at 3 KW or above, 400°C is attained in five seconds. In both cases, since the quantity of exhaust gas varies at the beginning of the operation of the engine, an average quantity of exhaust gas emitted when the temperature thereof is below 300°C is used.

To energize the heater at the initial stage of the operation of the engine, a battery of 24V is usually used. At that time, the battery is preferably used together with a capacitor to obtain a temporary large current.

Since the exhaust gas at the beginning of the operation of the engine is rich (reducing atmosphere), introduction of the oxidizing gas is necessary for the conversion of CO and HC into $CO_2$ and water. Examples of suitable oxidizing gas include air, oxygen and ozone. From the practical point of view, however, introduction of air is simple and thus preferred. When the oxidizing gas is introduced, the amount of oxidizing gas is controlled in accordance with the engine speed by a mass flow sensor. In a practical operation, the amount of, for example, secondary air introduced is controlled such that the oxidation-reduction index given by the following expression will be held between 0.7 and 1.1, more preferable, between 0.8 and 1.0.

$$\text{Oxidation-reduction index} = \frac{\text{Oxidizing gas}}{\text{Reducing gas}} = \frac{(O_2 + 1/2NO)}{(2/3CO + 3/2HC)}$$

Oxidizing gas is introduced only when the oxidation-reduction index is outside of the aforementioned range. Preferably, introduction of the oxidizing gas is suspended in sixty seconds or below.

The heater is heated to a temperature at which the main catalyst of the catalytic converter or the light-off catalyst carried on the heater is activated or above, usually 300°C or above.

When the temperature of the heater exceeds the value at which the catalyst is activated , the power level is reduced preferably by an output adjuster. In a preferred practical operation, reduction in the power level is achieved by performing on-off control of the battery of 24V or 12V (by reducing the power level per unit time) or by performing inverter control. Although the time when the operation of reducing the power level begins varies depending on the level of power supplied, as stated above, since the temperature of the heater reaches 400°C within five or ten seconds, reduction in the power level is conducted five or ten seconds later from the energization of the heater.

Energization of the heater is suspended generally in sixty seconds or less.

The preferred heater employed in the method of the present invention is one having a resistance adjusting means. Such a heater is energized at a preferred current density of 5 A/mm$^2$ or above. Energization of the heater at a current density of 5 A/mm$^2$ or above increases the rate at which the temperature of the heater rises, and thus allows the temperature of the heater to reach 300°C or above within ten seconds. This in turn enables the main catalyst or the light-off catalyst carried on the heater to be activated effectively. More preferably, the heater is energized at a current density of 8 A/mm$^2$ or above. However, with too high a current density, a large amount of power is required and the catalyst on the heater is heated too high. From the viewpoint of durability of the catalyst, energization at no more than 30 A/mm$^2$ is therefore preferred.

It is desirable for the basic body of the heater to have a honeycomb structure.

Whereas any material, ceramic or metal, capable of generating heat when energized, can be used as the material of the honeycomb structure which is a basic body of the heater used in the method of the present invention, the use of metal enhances the mechanical strength and is thus preferred. Examples of such metals include stainless steel and materials having compositions of Fe-Cr-Aℓ, Fe-Cr, Fe-Aℓ, Fe-Ni, W-Co, and Ni-Cr. Among the above materials, Fe-Cr-Aℓ, Fe-Cr and Fe-Aℓ are preferred because of low cost and high resistance to heat, oxidation and corrosion. The honeycomb structure preferably employed in the heater used in the method of the present invention may be porous or non-porous. In the case where a catalyst is carried on the honeycomb structure, however, a porous honeycomb structure is preferred because a catalyst layer can be closely adhered to such a honeycomb structure, and hardly peels off the honeycomb structure even when a difference in the thermal expansion between the honeycomb structure and the catalyst exists.

The metal honeycomb structure may be prepared in the manner described below.

First, Fe powder, Aℓ powder and Cr powder, or alternatively powders of alloys of these metals, are mixed to prepare a metal powder mixture having a desired composition. Subsequently, the metal powder mixture is blended into an organic binder, such as methyl cellulose or polyvinylalcohol, and water to produce a readily formable mixture. That mixture is then formed into a shape of a desired honeycomb configuration by extrusion.

Next, the formed honeycomb body is fired in a non-oxidizing atmosphere at a temperature ranging between 1000 and 1450 °C. During the sintering in the non-oxidizing atmosphere containing hydrogen, the organic binder is decomposed and thereby removed with the aid of Fe or the like, which acts as a catalyst. A good sintered body (a honeycomb structure) can therefore be obtained.

Sintering at a temperature lower than 1000 °C achieves no sintering. Sintering conducted at a temperature higher than 1450 °C causes deformation of the resulting sintered body and is thus undesirable.

Preferably, a heat-resistant metal oxide layer is then formed on the surface of the cell walls and the surface of the pores of the obtained honeycomb structure.

Next, a resistance adjusting arrangement of a desired form is preferably provided on the obtained honeycomb structure between the electrodes thereof, which will be described later.

The resistance adjusting arrangement preferably provided on the honeycomb structure may take on any of the following forms:

(1) a slit or slits of any length, formed in any direction at any position
(2) variations in the length of the cell walls in the axial direction of the passages
(3) variations in the thickness (wall thickness) of the cell walls of the honeycomb structure or variations in the cell density of the honeycomb structure, or
(4) a slit or slits formed in the cell wall (rib) of the honeycomb structure.

Among the above-mentioned forms, formation of a slit or slits according to No. (1) is more preferable because it can easily control a heated portion.

Electrodes are preferably provided generally on the outer peripheral portion of or inside of the thus-obtained metal honeycomb structure by welding or brazing to manufacture a honeycomb heater.

The term, "electrodes" is used in this application to refer to any terminal through which a voltage is applied to the heater. The electrodes therefore include the direct bonding of the outer peripheral portion of the heater to a can body and terminals for grounding.

In the case of the metal honeycomb structure which is used as a heater, the resistance thereof will be preferably held between 0.001 Ω and 0.5 Ω.

Preferably, a catalyst is placed on the surface of the thus-obtained metal honeycomb structure so as to allow heat to be generated due to reaction (oxidation) of the exhaust gas.

The catalyst preferably supported on the surface of the metal honeycomb structure is made of a carrier having a high surface area and a catalyst activating material supported on the carrier. Typical examples of the carriers having a high surface area . include $\gamma$-A$\ell_2$O$_3$, TiO$_2$ , SiO$_2$-A$\ell_2$O$_3$ and perovskite. Examples of the catalytic activating materials include noble metals, such as Pt, Pd and Rh, and base metals, such as Cu, Ni, Cr and Co. The preferred catalyst comprises one in which from 10 to 100 g/ft$^3$ of Pt and/or Pd is loaded on the carrier made of $\gamma$-A$\ell_2$O$_3$.

Whereas the honeycomb structure may have any honeycomb configuration, it is desirable that the cell density be held between 6 to 1500 cells/in$^2$ (cpi$^2$) (which is 0.9 to 233 cells/cm$^2$) with a wall thickness ranging from 50 to 2000 $\mu$m.

In a resistance adjusting type heater designed for use in automotive exhaust emission control using the method of the invention, the best mode of the configuration of the heater and that of the slits formed in that heater will be described below.

The cell wall thickness (rib thickness) of the preferred honeycomb structure ranges between 75 and 500 $\mu$m. Below 75 $\mu$m, the structure deteriorates in strength and in the life of the heater. Above 500 $\mu$m, the pressure loss is great and a large amount of power is required to raise the temperature thereof. The most preferable range is between 100 and 300$\mu$m.

It is desirable that the honeycomb structure has a cell density ranging from 15.5 to 62 cells/cm$^2$ (100 to 400 cells/in$^2$). More specifically, a cell density of 15.5 cells/cm$^2$ (100 cells/in$^2$) or above is preferred taking into account the heat transfer area for heating gas flow in passages formed in the honeycomb structure and the catalyst surface area when the catalyst is carried on the honeycomb structure. Above 62 cells/cm$^2$ (400 cells/in$^2$) formation of the slits is difficult, and short-circuiting readily occurs due to the insufficient distance between the ribs which form a slit.

The open frontal area of the honeycomb structure is preferably between 50 and 85% from the viewpoints of the pressure loss and the strength.

With too long a heater length (the length of the heater in the axial direction of its passages), the cross-sectional area increases, thus requiring a large amount of current. With too short a heater length, the heat transferring area and catalyst geometrical surface area become undesirably small. In a heater designed for use as a preheater disposed in advance of the main catalyst, the preferred length of the heater is about 1/20 to 1/3 of the length of the main catalyst.

Slits are preferred to control the heating portion of the heater. In the case of a heater designed for use in automotive exhaust gas control, it is preferable for the heater to be heated relatively uniformly, and the slits are therefore formed such that the distance between the slit and the outer wall is larger than that between the adjacent slits.

A large number of slits formed in the heater increases the overall heating length of the heater and is therefore preferable. However, it also increases the resistance of the heater. This may result in reduction in a current density to below 5 A/mm$^2$ in the case where the voltage applied to the heater is fixed. So, the number of slits formed in the heater is determined such that it achieves a current density of 5 A/mm$^2$ or above.

The term, "honeycomb structure" is employed In this application to refer to an integral body having a large number of passages partitioned by cell walls. The passages may have any cross-sectional form (cell shape), e.g., a circular, polygonal or corrugated form.

The present invention will further be illustrated in the following illustrate examples.

Fig. 1(a) is a perspective view of an example of a resistance-adjusting type heater, preferably used in the method of this invention.

Fig. 1(b) is an enlarged perspective view of the essential parts of the heater of Fig. 1(a) which comprises a honeycomb structure 10 having a large number of passages 11 and a plurality of slits 12 which serve as the resistance adjusting means, the outer wall of the honeycomb structure 10 being provided with two electrodes 15. In Fig. 1(a) and Fig. 1(b), a reference numeral 13 denotes a cell wall (rib); 14, the cross-section of the rib; S, the cross-sectional area of the section 14 of all the ribs present between the adjacent slits; B, the diameter of a heater; C, the length of a heater; and D, the length of a slit.

Example 1

Fe powder, Fe-Cr powder (in which Cr was present in a ratio of 50 wt%) and Fe-A$\ell$ powder (in which A$\ell$ was present in a ratio of 50 wt%), having average particle sizes of 10, 20 and 22 $\mu$m, were mixed to prepare a mixture having a composition of Fe-20Cr-5A$\ell$ (% by weight). The obtained mixture was then blended into an organic binder (methyl cellulose), an antioxidant (oleic acid) and water to produce a readily formable body. The obtained body was then formed into honeycomb bodies having various rib thicknesses and various numbers of square cells (shown in Table 1) by extrusion. The formed honeycomb structures were dried, sintered in an atmosphere of H$_2$ at 1300 °C, and then subjected to heat treatment at 1000°C in the oxidizing atmosphere to form a heat-resistant metal oxide layer. The porosity of the obtained honeycomb structures was 22% by volume and the average pore diameter thereof was 5 $\mu$m.

The obtained honeycomb structures 10 having an outer diameter of 90 mm$\phi$ were processed such that they had various heater lengths C shown in Table 1. Thereafter, a predetermined number of slits 12, having a length ranging from 50 to 70 mm, were formed in the individual honeycomb structure 10. Thereafter, two electrodes 15 were provided on the outer wall of the individual resistance adjusting type heater obtained, and then a heat-resistant inorganic adhesive of zirconia was filled in the outer peripheral portion of each slit 12 to form an insulating portion, as shown in Fig. 1 (a).

Example 2

[Test of heater temperature rising characteristics]

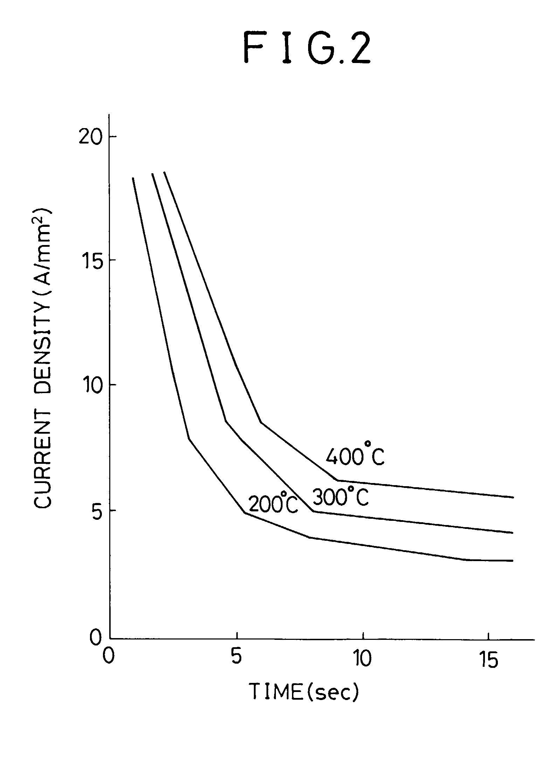

The individual heater was energized by a power source comprising a single 12V battery for use in a automobile, or two such batteries which were connected in series, while air was supplied thereto at a rate of 0.7 m$^3$/min. At that time, the temperature of the heater was measured. Table 1 and Fig. 2 respectively show the time required for each heater to be heated to temperatures of 200 °C, 300 °C and 400 °C.

The preferred heaters thus provide a current density of at least 5 A/mm$^2$ at 24V, or at 12V.

EP 0 717 178 B1

Table 1

|  | Heater No. | Thickness of rib (mm) | Cell density (cpi²) | Length of heater (mm) | No. of slits (pcs) | No. of ribs between adjacent slits (pcs) | Heat generating cross sectional area (mm²) | Overall heat generating length (mm) | Voltage (V) | Current (A) | Resistance (Ω) | Current density (A/mm²) | Heater temperature (time required to attain temperature) | | |
|---|---|---|---|---|---|---|---|---|---|---|---|---|---|---|---|
|  |  |  |  |  |  |  |  |  |  |  |  |  | 200 °C | 300 °C | 400 °C |
| Effect exerted by a difference in the number of ribs | 1 | 0.23 | 300 | 15 | 4 | 5 | 17.3 | 203 | 11.4 | 135 | 0.084 | 7.8 | (sec) 3.9 | (sec) 5.1 | (sec) 7.5 |
|  | 2 | 0.23 | 300 | 15 | 4 | 4 | 13.8 | 137 | 11.5 | 145 | 0.079 | 10.5 | 2.5 | 4.0 | 5.0 |
|  | 3 | 0.23 | 300 | 15 | 4 | 3 | 10.4 | 43 | 11.3 | 165 | 0.068 | 18.3 | 0.9 | 1.7 | 2.1 |
| Effect exerted by a difference in the number of slits | 4 | 0.23 | 300 | 15 | 7 | 5 | 17.3 | 420 | 22.5 | 155 | 0.145 | 9.0 | 2.8 | 4.5 | 5.5 |
|  | 5 | 0.23 | 300 | 15 | 8 | 5 | 17.3 | 412 | 22.4 | 145 | 0.154 | 8.4 | 3.0 | 4.6 | 6.0 |
|  | 6 | 0.23 | 300 | 15 | 10 | 5 | 17.3 | 510 | 22.4 | 110 | 0.204 | 6.4 | 4.0 | 6.2 | 9.0 |
| Effect exerted by a difference in the cell configuration | 7 | 0.11 | 400 | 15.6 | 5 | 9 | 15.0 | 270 | 11.5 | 120 | 0.096 | 8.0 | 3.0 | 5.0 | 6.8 |
|  | 8 | 0.15 | 400 | 15 | 5 | 6 | 13.5 | 250 | 11.5 | 135 | 0.085 | 10.0 | 2.7 | 4.4 | 5.3 |
| Effect exerted by a difference in the heater length | 9 | 0.23 | 300 | 10.0 | 4 | 8 | 18.4 | 180 | 22.5 | 220 | 0.102 | 12.0 | 2.4 | 3.5 | 4.7 |
|  | 10 | 0.23 | 300 | 23.5 | 15 | 4 | 21.6 | 870 | 22.3 | 145 | 0.153 | 6.7 | 4.0 | 6.5 | 8.5 |
| Comparative example | 5 | 0.23 | 300 | 15 | 8 | 5 | 17.3 | 420 | 11.3 | 75 | 0.150 | 4.3 | 7.0 | 15.0 | 25.0 |
|  | 6 | 0.23 | 300 | 15 | 10 | 5 | 17.3 | 510 | 11.4 | 55 | 0.207 | 3.2 | 14.0 | - * | - * |

* 3 0 0°C and 4 0 0°C are not attained.

As can be seen from Table 1 and Fig. 2, among the heaters having various configurations, the heaters which ensure a current density of 5 A/mm$^2$ or above can be heated to 300°C within ten seconds.

Example 3

[Test of performance at the beginning of operation of engine]

The heater No. 5 and a heater No. 11 which comprised of the heater No. 5 with a catalyst of $CeO_2$ - $\gamma$-A$\ell_2O_3$ (in which Pt and Pd were respectively present in an amount of 20g/ft$^3$) carried (coated) thereon were respectively prepared. Each of the heaters Nos. 5 and 11 was disposed in advance of (upstream of) a three-way catalyst (whose rib thickness was 6 mil and whose cell density was 62 cells/cm$^2$ (400 cells/in$^2$)) which was a main monolithic catalyst having an outer diameter of 90 mm$\varphi$ and a length of 100mm. A test of the performance of each of these catalytic converter systems at the beginning of the operation of an engine was conducted by operating an engine (A/F = 14.6) in such a manner that the temperature thereof was raised at a fixed speed from 100°C to 420°C over two minutes and was then maintained at 420°C for one minute and by measuring the conversion for CO, HC and NOx. At that time, the exhaust gas was introduced at a rate of 0.7 m$^3$/min. Energization of the heater by two types of batteries, 24 V and 12 V, was started when the temperature of the exhaust gas reached 100°C. Thereafter, on-off control was performed on the heater so as to maintain the temperature of the heater to 450°C. Table 2 shows the obtained average conversion for the emissions.

## Table 2

| Test No. | Heater No. | Voltage (V) | Initial current (A) | Current density (A/mm²) | Time required for 300°C to be reached (sec) | Average conversion rate | | |
|---|---|---|---|---|---|---|---|---|
| | | | | | | CO | HC | NOx |
| Example of the present invention | 1 | 5 | 22.4 | 145 | 8.5 | 4.5 | 66 | 52 | 64 |
| | 2 | 11 | 22.3 | 150 | 8.7 | 4.0 | 72 | 60 | 71 |
| Example for reference | 3 | 5 | 0 | — | — | (75.0)* | 45 | 32 | 44 |
| | 4 | 11 | 0 | — | — | (75.0)* | 48 | 35 | 47 |
| Comparative example | 5 | 5 | 11.2 | 75 | 4.3 | 14.8 | 53 | 38 | 48 |
| | 6 | 11 | 11.3 | 75 | 4.3 | 12.0 | 58 | 44 | 52 |

* Heated by exhaust gas

As is clear from Table 2, the examples which ensured a current density of 5 A/mm$^2$ or above exhibited more excellent exhaust gas conversion than the comparative examples which ensured a current density of no more than 5 A/mm$^2$. Among the examples, the catalyst of heater No. 2 was activated to the highest degree. Heater No. 2 was turned off after it had been energized for about one and a half minutes, because it started heat generation by ignition of the catalyst carried on the heater.

Example 4

The performance of the catalytic converter at the beginning of the operation of an engine was tested by introducing an exhaust gas of A/F = 14.0 ( a rich one whose oxidation-reduction index was 0.40) whose temperature was raised at a fixed rate from 100 °C to 420 °C for two minutes and was then maintained at 420 °C for one minute and by measuring the conversion for the exhaust emissions (CO, HC and NOx). At that time, the exhaust gas was respectively introduced at a rate of 0.7 m$^3$/min and 1.0 m$^3$/min . Secondary air was introduced into the catalytic converter at a rate of 50ℓ/min concurrently with the introduction of the engine exhaust gas. Supply of the secondary air was suspended sixty seconds later.

The catalytic converter employed in this Example comprised a three-way catalyst (whose rib thickness was 5 mil and whose cell density was 62 cells/cm$^2$ (400 cells/in$^2$)), having an outer diameter of 90 mmφ and a length of 100 mm, which served as a main monolithic catalyst, and a heater disposed in advance of (upstream of) the three-way catalyst.

The heater employed in the above catalytic converter was manufactured in the manner described below.

Fe powder, Fe-Cr powder (in which Cr was present in a ratio of 50 wt%) and Fe-Aℓ powder (in which Aℓ was present in a ratio of 50 wt%), having average particle sizes of 10, 20 and 22 μm, were mixed to prepare a mixture having a composition of Fe-20Cr-5Aℓ (% by weight). The obtained mixture was then blended into an organic binder (methyl cellulose), an antioxidant (oleic acid) and water to produce a readily formable body. The obtained body was then formed into honeycomb bodies having various rib thicknesses and various numbers of square cells shown in Table 3 by extrusion. The formed honeycomb structures were dried, sintered in an atmosphere of H$_2$ at 1300 °C, and then subjected to heat treatment: at 1000 °C in the atmosphere. The porosity of the obtained honeycomb structures was 22 % and the average pore diameter thereof was 5 μm.

As shown in Fig. 1 (a) (in this case, the number of slits was four), the obtained honeycomb structures 10 having an outer diameter of 90 mmφ were processed such that they had various heater lengths shown in Table 3. Thereafter, a predetermined number of slits 12, having a length ranging from 50 to 70 mm, were formed in the individual honeycomb structure 10. Thereafter, two electrodes 15 were provided on the outer wall of the individual resistance adjusting type heater obtained, and then a heat-resistant inorganic adhesive of zirconia was filled in the outer peripheral portion of each slit 12 to form an insulating portion.

## Table 3

| | Thickness of rib (mm) | No. of cells (cpi$^2$) | Length of heater (mm) | No. of slits(pcs) |
|---|---|---|---|---|
| Heater No.12 | 0.23 | 300 | 15 | 8 |
| Heater No.13 | 0.15 | 400 | 15 | 5 |

| | No. of ribs between slits (pcs) | Heat generating area (mm$^2$) | Overall heat generating length (mm) |
|---|---|---|---|
| Heater No.12 | 5 | 17.3 | 412 |
| Heater No.13 | 6 | 13.5 | 250 |

A catalyst of $CeO_2$-$\gamma$-$A\ell_2O_3$ in which Pt and Pd were respectively present in an amount of 20 g was placed on each of heater Nos. 12 and 13.

The individual heater was energized using a battery of 24 V or 12 V. Energization started concurrently with the introduction of the engine exhaust gas. When the temperature of the heater reached 450 °C, on-off control began. For reference, test was also conducted in which the heater was energized for thirty seconds before the exhaust gas was introduced.

Table 4 shows the results of the test.

Table 4

| | Test No. | Heater No. | Voltage (V) | Current (A) | Amount of exhaust gas (m³/min) | Power (kw/m³) | Current density (A/mm²) | Introduction of oxygen | Time required for the heater temperature to be reached 300°C | 400°C | Heater no-off starting time | Average conversion rate (%) CO | HC | NOx |
|---|---|---|---|---|---|---|---|---|---|---|---|---|---|---|
| Example for reference | 1 | 12 | — | — | 0.7 | — | — | No | (75 sec)* | (113 sec)* | — | 13 | 11 | 46 |
| | 2 | 12 | — | — | 1.0 | — | — | No | (75 sec)* | (113 sec)* | — | 10 | 8 | 44 |
| Example of the present invention | 3 | 12 | 22.4 | 145 | 0.7 | 4.6 | 6.0 | Yes | 4.5 | 5.0 | 6.0 | 65 | 50 | 64 |
| | 4 | 12 | 22.4 | 145 | 1.0 | 3.2 | 6.0 | Yes | 5.3 | 7.0 | 8.0 | 62 | 57 | 60 |
| | 5 | 13 | 11.5 | 135 | 0.7 | 2.2 | 10 | Yes | 4.2 | 5.0 | 6.0 | 64 | 51 | 65 |
| | 6 | 13 | 11.5 | 135 | 1.0 | 1.6 | 10 | Yes | 5.2 | 6.8 | 7.5 | 58 | 45 | 38 |
| Comparative example | 7 | 13 | 11.3 | 75 | 0.7 | 1.2 | 4.3 | Yes | 14.5 | 24.0 | 35 | 26 | 23 | 52 |
| | 8 | 13 | 11.3 | 75 | 1.0 | 0.8 | 4.3 | Yes | 20.5 | 35.0 | 55 | 22 | 21 | 48 |
| | 9 | 13 | 22.4 | 145 | 0.7 | 4.6 | 6.0 | No | 4.5 | 4.8 | 5.8 | 13 | 11 | 60 - |

\* Heated by exhaust gas

As is clear from Table 4, when the level of power supplied to the heater is low, it takes much time for the heater to be heated to 300 °C or above. In consequence, the degree at which the catalyst is activated is low, and the exhaust gas conversion is also low. Also, in the case where $O_2$ is not introduced, the conversion for CO and HC remains low, even when the heater is heated.

It is also apparent from Table 4 that when the heater is heated at a power level of Examples embodying our proposals and $O^2$ is introduced, a high conversion for each emission can be achieved.

As will be understood from the foregoing description, in the heater and catalytic converter described above, since the resistance adjusting means is formed on the heater and catalytic converter such that it ensures a current density of 5 A/mm$^2$ or above, or since the catalytic converter is operated such that it ensures a current density of 5 A/mm$^2$ or above, low-temperature automotive exhaust emissions at the beginning of the operation of an engine or the like can be quickly heated, and a high exhaust gas conversion can thus be achieved.

Then, in the catalytic converter operating method according to the present invention, the temperature of a heater and that of a main catalyst incorporated in the catalytic converter are raised quickly at the initial stage of the operation of an engine to activate the catalysts and thereby achieve increase in the exhaust gas conversion. The level of power is reduced after the desired temperature has been reached. In consequence, the catalytic converter can be operated efficiently an economically.

**Claims**

1. A method of operating a catalytic converter which incorporates a heater and at least one of a main catalyst and a light-off catalyst carried on the heater, to treat exhaust gas from an engine, comprising
   without energizing the heater before start of the engine and concurrently with the introduction of exhaust gas to the heater, starting energising the heater at an average power level of at least 1.5kW per unit m$^3$/min flow of exhaust gas, while supplying an oxidising gas to the catalytic converter, and
   after the temperature of the heater has exceeded a value at which the main catalyst of the catalytic converter, or the light-off catalyst carried on the heater, functions, reducing the power level of the heater and stopping supply of the oxidising gas.

2. A method according to claim 1 in which said average power level is at least 3kW.

3. A method according to claim 1 or claim 2 in which the exhaust gas flows through a heated body of the heater and the heater is energised to said average power level by a current density of at least 5A/mm$^2$.

4. A method according to any one of claims 1 to 3 in which the heater temperature at which the power level is reduced is at least 300°C.

5. A method according to any one of claims 1 to 4 wherein said oxidizing gas is air and is supplied to the catalytic converter in a manner such that the oxidation-reduction index given by

$$\frac{(O_2 + \frac{1}{2} NO)}{(^2/_3 CO + ^3/_2 HC)}$$

where $O_2$, NO, CO and HC are concentrations of the respective gases, is in the range 0.7 to 1.1.

6. A method according to any one of claims 1 to 5 wherein the step of reducing the power level of the heater is achieved by performing one of on-off control and inverter control.

**Patentansprüche**

1. Verfahren zum Betreiben eines katalytischen Konverters, der eine Heizeinrichtung und zumindest einen von einem Hauptkatalysator und einem auf der Heizeinrichtung getragenen Lightoff-Katalysator umfasst, zur Behandlung von Abgas aus einem Motor, umfassend:
   ohne Energiezufuhr zur Heizeinrichtung vor dem Starten des Motors und gleichzeitig mit dem Einbringen von Abgas in die Heizeinrichtung, das Aufnehmen der Energiezufuhr zur Heizeinrichtung mit einer mittleren Leistung von zumindest 1,5 kW pro m$^3$/min Abgasstrom, während dem katalytischen Konverter ein Oxidationsgas zugeführt wird, und

nachdem die Temperatur der Heizeinrichtung einen Wert überschritten hat, bei dem der Hauptkatalysator des katalytischen Konverters oder der auf der Heizeinrichtung getragene Lightoff-Katalysator seine Funktion erfüllt, das Reduzieren der Leistung der Heizeinrichtung und das Unterbrechen der Zufuhr des Oxidationsgases.

2. Verfahren nach Anspruch 1, bei dem die mittlere Leistung zumindest 3 kW beträgt.

3. Verfahren nach Anspruch 1 oder 2, bei dem das Abgas durch einen erhitzten Körper der Heizeinrichtung strömt und der Heizeinrichtung zum Erreichen der mittleren Leistung Energie mit einer Stromdichte von zumindest 5 A/mm$^2$ zugeführt wird.

4. Verfahren nach einem der Ansprüche 1 bis 3, bei dem die Temperatur der Heizeinrichtung, bei der die Leistung reduziert wird, zumindest 300 °C beträgt.

5. Verfahren nach einem der Ansprüche 1 bis 4, worin das Oxidationsgas Luft ist und dem katalytischen Konverter auf solche Weise zugeführt wird, dass der Oxidations-Reduktions-Index, der durch

$$\frac{(O_2 + 1/2NO)}{(2/3CO + 3/2HC)}$$

gegeben ist, worin $O_2$, NO, CO und HC Konzentrationen der jeweiligen Gase sind, im Bereich von 0,7 bis 1,1 liegt.

6. Verfahren nach einem der Ansprüche 1 bis 5, worin der Schritt des Reduzierens der Leistung der Heizeinrichtung erreicht wird, indem eine Ein-Aus-Steuerung und Inverter-Steuerung durchgeführt wird.


**Revendications**

1. Méthode de fonctionnement d'un convertisseur catalytique où est incorporé un réchauffeur et l'un d'un catalyseur principal et d'un catalyseur d'extinction porté sur le réchauffeur pour traiter les gaz d'échappement d'un moteur, consistant à :

sans exciter le réchauffer avant démarrage du moteur et concurremment avec l'introduction des gaz d'échappement au réchauffeur, commencer à exciter le réchauffeur à un niveau moyen de puissance d'au moins 1,5kW par m$^3$/mn d'écoulement des gaz d'échappement tout en fournissant un gaz oxydant au convertisseur catalytique et après que la température du réchauffeur a dépassé une valeur à laquelle le catalyseur principal du convertisseur catalytique ou le catalyseur d'extinction porté sur le réchauffeur fonctionne, réduire le niveau de puissance du réchauffeur et arrêter la fourniture du gaz oxydant.

2. Méthode selon la revendication 1, dans laquelle ledit niveau moyen de puissance est d'au moins 3kW.

3. Méthode selon la revendication 1 ou la revendication 2, dans laquelle les gaz d'échappement s'écoulent à travers un corps chauffé du réchauffeur et le réchauffeur est excité audit niveau moyen des puissances par une densité de courant d'au moins 5A/mm$^2$.

4. Méthode selon l'une quelconque des revendications 1 à 3, dans laquelle la température du réchauffeur à laquelle le niveau de puissance est réduit est d'au moins 300°C.

5. Méthode selon l'une quelconque des revendications 1 à 4, où le gaz oxydant est de l'air et il est fourni au convertisseur catalytique d'une manière telle que l'indice d'oxydation-réduction donné par

$$\frac{(O_2+1/2NO)}{(2/3CO+3/2HC)}$$

où $O_2$, NO, CO et HC sont des concentrations des gaz respectifs, soit dans la gamme de 0,7 à 1,1.

6. Méthode selon l'une quelconque des revendications 1 à 5, où l'étape de réduire le niveau de puissance du réchauffeur est obtenue en accomplissant l'une d'une commande par tout ou rien et d'une commande par inverseur.

# F I G . 1 (a)

# F I G . 1 (b)

# F I G.2